# EUROPEAN PATENT SPECIFICATION

(11) **EP 2 254 428 B1**
(45) Date of publication and mention of the grant of the patent: **05.06.2013**
(21) Application number: 09711720.4
(22) Date of filing: 24.02.2009
(51) Int. Cl.: A23L 1/237, A23L 1/222, A23L 1/36, A23L 1/227, A21D 8/02, A21D 2/02, A23L 1/212

(54) **THE USE OF SOLUBLE TOMATO SOLIDS FOR REDUCING THE SALT CONTENT OF FOOD PRODUCTS**
VERWENDUNG VON LÖSLICHEN TOMATENFESTSTOFFEN FÜR DIE VERRINGERUNG DES SALZGEHALTS VON NAHRUNGSMITTELPRODUKTEN
UTILISATION DE SOLIDES DE TOMATES SOLUBLES POUR RÉDUIRE LA TENEUR EN SEL DE PRODUITS ALIMENTAIRES

(30) Priority: 24.02.2008 US 30967
(43) Date of publication of application: 01.12.2010
(60) Divisional application: 12177848.4
(73) Proprietor: Lycored Ltd., 84102 Beer Sheva (IL)
(72) Inventor: NIR, Zohar, 85025 Meitar (IL); HARTAL, Dov, 69016 Tel-Aviv (IL); ZACH, Ehud, 79190 Or-Hanner (IL)
(74) Representative: Turner, Craig Robert
(86) International application number: PCT/IL2009/000207
(87) International publication number: WO 2009/104194

(56) References cited:
- WO-A-99/60868
- WO-A-2007/042274
- WO-A-2008/040611
- WO-A-2008/078315
- GB-A- 1 361 510
- US-A- 5 837 311
- US-A1- 2001 024 676
- PETRÓ-TURZA ET AL: "Study on Taste Substances of Tomato" ACTA ALIMENTARIA, vol. 18, no. 1, 1989, pages 107-117, XP008108509
- ORUNA-CONCHA ET AL.: "Differences in Glutamic Acid and 5'-Ribonucleotide Contents between Flesh and Pulp of Tomatoes and the Relationship with Umami Taste" JOURNAL OF AGRICULTURAL AND FOOD CHEMISTRY, no. 55, 14 June 2007 (2007-06-14), pages 5776-5780, XP002537902
- L. KURPPA: "Basic component for all kinds of functional food-presentation of multifunction spice Favomare" INNOVATIONS IN FOOD TECHNOLOGY, May 2004 (2004-05), pages 92-96, XP008108385 GB

## Description

### Field of the Invention

The present invention relates to a method for reducing the total amount of sodium chloride added to food products without affecting the saltiness of said products, by means of addition of soluble tomato solids thereto.

### Background of the Invention

Sodium plays a key role in human body by maintaining of cellular fluid balance as well as taking part in nerve and muscle function. However, excessive sodium intake - for example, in the form of ingested sodium chloride - can adversely affect blood pressure and cardiovascular health.

Common Salt (i.e. NaCl - sodium chloride) is a flavoring agent widely used in the food industry. Many processed food products, particularly snack foods, contain relatively high levels of salt. For example, salted potato crisps (commonly known in certain countries as "potato chips") contain 1.3-2% salt. The addition of salt to potato crisps is generally performed using a tumbler or other, similar, machinery immediately following the frying stage, while the crisps are still hot. Similarly, flavoring and seasoning mixes that include *inter alia* salt are also added to other fried or baked snack foods using the same methods as employed in the case of potato chips. The salt-containing seasonings are added in a dry form to oil slurry or to coat fried and baked snacks foods, in other cases the seasoning and/or salt are added directly to the product dough, prior to further processing.

As a result of increasing public health awareness regarding the potential health hazards of the ingestion of too much salt, the manufacturers of potato crisps, snack foods and other foods have been attempting to reduce the salt levels in their products without significantly altering the taste and overall acceptability of said products. Various different approaches have been taken in an attempt to provide a solution to this problem. For example, the complete or partial substitution of sodium chloride with potassium chloride has been attempted. However, this approach has been found to be unsatisfactory, due to the bitter and metallic off-flavor that the potassium chloride imparts to the food. In another approach, the reorganization of the physical form of the sodium chloride (e.g. by granulation or alteration of the particle shape) has been attempted. However, this approach has not provided a satisfactory cost-effective solution for the replacement or partial replacement of salt on a commercial scale.

Consequently, despite the various prior art attempts, an urgent need for a method of reducing or partially reducing the amount of salt added to food products, still exists.

It is thus a primary purpose of the present invention to provide a partial salt replacer which may be used to enhance the salty flavor, thus allowing reduction of the amount of salt added to food products without significantly altering their flavor and nature.

### Summary of the Invention

It has now been unexpectedly found that it is possible to partially replace the salt added to food products by means of the addition of soluble tomato solids (hereinafter referred to in the singular as "STS"). By means of controlling the relative amounts of salt and STS in a food product, it has been found that it is possible to reduce the total amount of added salt while retaining the saltiness of said product, and without adding any significant tomato-derived flavors

The term STS is used throughout this disclosure to refer to the soluble solids that are directly obtainable from tomato serum, which in turn is one of two fractions (along with pulp) that are obtained by means of separating crushed, heat-treated tomatoes. Further details of the preparation of STS are provided hereinbelow.

According to the present invention , the STS, which is prepared from separated tomato serum and optionally concentrated and/or dried, is not subjected to any further treatment aimed at removing color or flavor therefrom.

The present invention is thus primarily directed to a method for reducing the amount of sodium chloride in a food product without adversely affecting the salty taste thereof, wherein said method comprises adding STS to said food product and reducing the amount of salt normally added thereto.

The phrase "adversely affecting the salty taste thereof" is used to indicate that the method of the present invention generally results in a preservation of the original saltiness of the food product without adversely affecting its flavor profile (i.e. the saltiness associated with the amount of salt usually present in said product), despite the fact that amount of salt used to prepare the product according to the presently disclosed method is significantly reduced.

The present inventors have also discovered that while STS generally may be used as a flavor enhancer, it is possible to optimize STS for use in partially replacing salt (i.e. salty taste enhancement) by means of controlling certain properties of the STS, such as acidity, formol number and the degree to which the STS becomes non-enzymatically "browned" during its preparation.

Thus, in one particularly preferred embodiment, the STS used in this method is characterized in having an acidity level within the range of about 3% to about 4%.

It has further been found by the inventors that that the aforementioned method for partially-replacing salt is preferably performed using STS that has all of the following properties:
- A titratable acidity (measured as an equivalent of citric acid) in the range of about 3 - 4%, referred to STS at a concentration of 60° Bx.
- A formol number of at least 40, preferably more than 43 referred to STS at a concentration of 5° Brix. (The formol number is a measure of the total amino acid concentration of the sample being measured.) This corresponds to a formol number of at least 400, preferred more than 500, in STS at a concentration of 60° Bx.
- A browning evaluation index of up to about 20, preferred less than 15, wherein said index is equivalent to the √ a²+b² value obtained from tristimulus colorimeter measurements.

It is to be noted that Degrees Brix (°Bx) is a measurement of dissolved solids content in a solution, which is widely understood and used in the art. It is measured with a refractometer and refers to the refractive index of sucrose.

It is further to be noted that when the present disclosure, description and claims refer to the aforementioned parameters being "measured in a STS sample having a concentration of 60° Bx" or having values "referred to STS at a concentration of 60° Bx", the intention is that the measurements of said parameters are made on said STS sample after its concentration has been adjusted (if necessary) to 60° Bx. Moreover, it is to be recognized that the parameter values are expressed in this manner for the purposes of standardization and do not, in any way, restrict the method or product of the present invention to STS having a concentration of 60° Bx (or indeed to any other Brix value mentioned herein).

The detail of testing these parameters will be described in more detail hereinbelow.

The present method may be used to partially replace the salt in many different food products, as will be described in more detail, hereinbelow.

In one preferred embodiment, the STS which is added to the food product, or used to coat the food product, is present in a powder form. In another preferred embodiment, the STS which is added to the food product, or used to coat the food product, is present in a liquid form. In many implementations of the present method, the powdered STS is pre-blended with the reduced amount of salt, prior to addition to the food product. However, in other cases, the salt and the STS (powder or liquid) may be separately added to, or on top of, the food product.

In one particularly preferred embodiment, the method of the present invention is a method for partially replacing the salt added to potato crisps (potato chips), wherein said method comprises the steps of:
a) preparing a seasoning pre-blend comprising defined amounts of salt and powdered STS;
b) adding a defined amount of said seasoning pre-blend to a batch of potato crisps and mixing said pre-blend therewith.

In one particularly preferred embodiment, the STS used in this method is characterized in having an acidity level within the range of about 3% to about 4%.

In another particularly preferred embodiment, the STS used in this method is characterized in having:
a) an acidity level within the range of about 3% to about 4%;
b) a formol number greater than about 500; and
c) a color intensity of up to 15, wherein said color intensity value is determined as the √ a²+b² value derived from a colorimetric measurement;
wherein said acidity level, formol number and color intensity number are measured in a STS sample having a concentration of 60° Brix.

Preferably, the addition of the pre-blend to the potato crisps and the mixing together thereof is performed in a tumbler.

In one preferred embodiment, the pre-blend mixture of powdered STS and salt comprises up to about 50% w/w STS, wherein the total amount of said mixture added to the potato crisps is substantially equal to the amount of salt added to regular salted crisps. In another preferred embodiment, the mixture comprises up to 50% w/w STS and more than 50% salt, wherein the total amount of said mixture added to the potato crisps is substantially equal to the amount of salt added to regular salted crisps.

In another aspect, the present invention provides a reduced salt food product comprising STS and a reduced amount of salt when compared to the regular fully-salted product, wherein said food product has saltiness substantially similar to that of the regular fully-salted product, and is substantially devoid of any additional tomato-derived flavors. In one preferred embodiment of this aspect of the invention, the reduced-salt food product is potato crisps.

In a further aspect, the present invention provides a reduced-salt food product prepared according to the method disclosed hereinabove. In one preferred embodiment of this aspect of the invention, the reduced-salt food product comprises potato crisps.

In one preferred embodiment, the reduced-salt product is prepared according to any of the embodiments of the preparative method disclosed hereinabove.

In one preferred embodiment, the final concentration (w/w %) of STS in the reduced-salt food product is in the range of about 0.05 to about 5 %. More preferably, the final STS concentration is in the range of about 0.2 to about 0.8 %.

In other embodiments of the above-disclosed method and reduced-salt food products, said reduced-salt food product may comprise any solid or liquid food or beverage that normally comprises added salt as part of the seasoning. Non-limiting examples of such products are described hereinbelow.

In another aspect, the present invention further provides a salty-taste enhancing composition comprising STS, wherein said STS is characterized in having an acidity level within the range of about 3% to about 4%.

In another preferred embodiment of this aspect, the present invention further provides a salty-taste enhancing composition comprising STS, wherein the STS in said composition possesses all of the following characteristics:
a) an acidity level within the range of about 3% to about 4%;
b) a formol number of at least 40, preferably more than 43, when said STS is at a concentration of 5° Brix;
   the formol number is at least 400 preferably more than 500, when said STS is at a concentration of 60° Brix;
c) a color intensity value (browning evaluation index) of up to about 20, preferably up to about 15, wherein said color intensity value is determined as the √ a²+b² value derived from a colorimetric measurement.

The term "salty taste enhancing composition" as used herein refers to a flavoring composition either consisting of STS alone (in liquid or powder form) or comprising said STS pre-blended with salt and/or other flavoring agents. It is to be noted that the salty taste enhancing composition disclosed above also possesses other flavor-enhancing properties. These will be described in more detail hereinbelow.

In a further aspect, the present invention is directed to a method for enhancing flavor in foods, wherein said method comprises adding STS to said food product, wherein said STS is characterized by having a titratable acidity equal to or less than about 3%.

In a preferred embodiment of this aspect, the present invention is directed to a method for enhancing flavor in foods, wherein said method comprises adding STS to said food product, wherein said STS is characterized by having all of the following properties:
- A titratable acidity (measured as an equivalent of citric acid) less than about 3%, referred to STS at a concentration of 60° Bx.
- A formol number of at least 40, preferably at least 43, referred to STS at a concentration of 5° Brix. Alternatively, this may be expressed as a formol number of at least 400, preferably at least 500, referred to STS at a concentration of 60° Brix (The formol number is a measure of the total amino acid concentration of the sample being measured.) This corresponds to a formol number of at least 400 in STS at a concentration of 60° Bx.
- A browning evaluation index of up to about 20, preferred up to about 10, wherein said index is equivalent to the √ a²+b² value obtained from tristimulus colorimeter measurements.

Disclosed herein is also a flavor-enhanced food product comprising STS, wherein said food product is substantially devoid of any additional tomato-derived flavors, and wherein said product is prepared by the method disclosed immediately hereinabove.

Further disclosed herein is a flavor-enhancing composition comprising STS, wherein the STS in said composition possesses an acidity level of less than about 3%, referred to STS at a concentration of 60° Bx.

In a preferred embodiment of this aspect, it is disclosed herein a flavor-enhancing composition comprising STS, wherein the STS in said composition possesses all of the following characteristics:
a) an acidity level of less than about 3%, referred to STS at a concentration of 60° Bx;
b) a formol number of at least 40, preferably at least 43, when said STS is at a concentration of 5° Brix. This may
   also be expressed as a formol number of at least 400, preferably at least 500, referred to STS at a concentration of 60° Brix
c) a color intensity value (browning evaluation index) of up to about 20, preferably up to about 10, wherein said color intensity value is determined as the √ a²+b² value derived from a colorimetric measurement.

The term "flavor enhancing composition" as used herein refers to a flavoring composition comprising STS (in liquid or powder form) that may be used to enhance the flavor of foodstuffs or beverages.

All the above and other characteristics and advantages of the present invention will be further understood from the following illustrative and non-limitative examples of preferred embodiments thereof.

### Detailed Description of Preferred Embodiments

As mentioned hereinabove, the present inventors have previously reported the flavor enhancement properties of an STS preparation (at a 60°Bx concentration). This natural, additive-free product contains significant amounts of sugars (fructose and glucose together account for about 37 - 39% of the total weight of the STS) and free amino acids (approximately 8.5%, of which 2.5% is Glutamic acid).

The process for producing STS (at a concentration of 60Bx) is described in US 6,890,574, which is incorporated in its entirety into the present disclosure. Briefly, tomatoes are processed (as described in US 5,837,311, in order to obtain two fractions - an STS-rich tomato serum and a pulp. Following heat treatment, the serum is then concentrated to a Brix level higher than 4.5°, for example 60°Bx (or any other desired Bx strength). This concentration step is commonly performed using a continuous evaporator, by means of feeding said evaporator with a continuous stream of serum at an elevated temperature, usually for a period of greater than 20 minutes, under vacuum.

It is to be noted that the clear (i.e. non-opaque) property of the STS (which relates to the absence of insoluble tomato solids) is apparent only when it is diluted to Brix value of about 4.5°Bx. At higher Bx levels (including the 60°Bx level as used in the STS of the examples of the present invention), the product is opaque.

The process of preparing STS described hereinabove yields at all Bx values, a liquid product that is suitable for addition (at, for example, 60°Bx) to liquid based foods and beverages. However, in order to incorporate the STS into solid food products (in particular, into snack foods such as potato crisps) a powdered form has been developed by the present inventors. This powdered form is produced by drying the STS (by means of either spray drying on a suitable carrier such as maltodextrins (as described in co-owned US 6,890,574), or by using any other suitable dehydration step that is well known to the skilled artisan in this field). In this powdered preparation (as used in the present invention), the water in the STS 60°Bx (approximately 50%) is substituted with maltodextrins.

It has unexpectedly been found by the present inventors that the powdered form of STS may be used to partially reduce the level of salt normally used to flavor potato crisps and other food products, thereby reducing the total salt concentration in said products. Furthermore, by carefully selecting the relative amounts of STS and salt, products having flavor properties very similar to those containing the regular salt level products (i.e. equivalent levels of saltiness without the significant addition of tomato-derived flavors) may be obtained. The use of the powdered form of the STS to partially replace the salt in potato crisps is described in Example 1, below.

As mentioned hereinabove, the present inventors have now found that it is necessary to control certain properties of the STS within defined ranges in order to achieve optimal salty-taste enhancing characteristics. These properties include titratable acidity, formol number and color intensity. It is to be noted that the STS compositions having properties that fall within these ranges also possess other flavor-enhancing properties. However, it has been further found by the inventors that when said properties of the STS compositions fall within other defined ranges, said compositions possess flavor enhancing properties only (i.e. they lack the specific ability to replace or partially replace salt). The extensive investigations carried out by the inventors have led them to define the following ranges for the aforementioned properties:

| **Properties** | **Values for STS as salty-taste and flavour enhancer:** | **Values for STS as flavor enhancer only:** |
|---|---|---|
| Formol Number in 5°Bx STS | ≥40, preferably ≥ 43 | ≥40, preferably ≥ 43 |
| Formol Number in 5°Bx Tomato Serum* | ≥40, preferably ≥ 43 | ≥40, preferably ≥ 43 |
| Formol Number in 60°Bx STS | ≥ 400, preferably ≥ 500 | ≥ 400, preferably ≥ 500 |
| % acidity (expressed as % Citric Acid) in STS | 3% - 4% | ≤3.0% |
| % acidity (expressed as % Citric Acid) in Tomato Serum* | 0.25% - 0.33% | ≤0.25% |
| Color intensity √a²+b² In STS | ≤20, preferably ≤ 15 | ≤20, preferably ≤ 10 |

These defined numerical ranges now permit, for the first time, the manipulation of the indicated properties of STS in order to pre-determine the type of flavor enhancement that is to be obtained using STS-containing compositions.

Titratable acidity is a measure of the content of acids determined by titration with sodium hydroxide solution to a pH-value of 8.1, The measurement of titratable acidity is well known in the art, and the details of one commonly used method may be found in the protocol (reference number IFUMA03) published by the International Federation of Fruit Juice Produce (Paris, France; obtainable on-line at http://www.ifu-fruitjuice.com/index_commande.php). The titratable acidity determined by this method (expressed in units of mmoles of H⁺ per liter) may be converted to the equivalent of citric acid by means of multiplying the titratble acidity value mentioned above by the specific conversion factor for citric acid, 0.064, thereby yielding a result expressed in grams per liter.

The determination of formol number (a measure of the number of amino acid groups) is also well known to all skilled artisans in the field. The method is based on titration of amino acids with formaldehyde in the presence of potassium hydroxide, in accordance with the following reaction:

RCH(NH₂)COOH + HCHO + KOH → RCH ( NHCH₂OH) COOK + H₂O

The determination of formol number takes place in three steps:
1) Neutralisation of titratable acidity by means of an end point titration at pH 8.2 with NaOH 0.1 eq/l
2) Addition of an excess of formol (HCHO) to the solution. This operation locks the NH₂ groups of amino acids due to the decrease in pH and allows titration of the COOH groups of amino acids with an end point titration at pH 8.2
3) Second endpoint titration at pH 8.2 to determine total amino acid content. The details of one commonly used standard method for determining the formol number may be found in the protocol (reference number IFUMA30) published by the International Federation of Fruit Juice Produce (details given above).

A color intensity value (√a²+b²) which may be used as a browning evaluation index may be calculated directly using the software associated with most modern tristimulus colorimetric devices (e.g. the HunterLab type ColorQuest XE colorimeter).

The titratable acidity and the formol number of the STS may be influenced by means of selecting tomato strains having fruit that yield sera having these factors within the desired range. Thus, in one preferred embodiment, the STS may be prepared from a tomato serum having an acidity level within the range of about 0.25% to about 0.33%, and a formol number of at least 40 (at a concentration of 5° Brix).

Tomato strains suitable for preparing such sera include (but are not limited to):
- H-9780 (Heinz, USA)
- AB-2 (A.B.Zeraim Ltd., Israel)

Additional factors which may influence the titratable acidity and the formol number of the STS include the growth conditions use to cultivate the tomato plants (including climate, soil type etc.). These factors are well known to the skilled artisan in this field and may be advantageously selected or altered in order to obtain tomatoes that yield serum having the desired acidity. Further refinement of the acidity and formol number of the STS may also be achieved by blending sera obtained from two or more different strains.

In addition to the selection of tomato strains yielding serum having the desired formol number, it is important to carefully control the exposure of the serum and of the STS prepared therefrom to heat during processing and storage, in order to prevent an undesirable reduction in said formol number.

The browning evaluation index (color value) of the STS may similarly be controlled, such that said index has a value of 20 or less, by means of avoiding excessive exposure of the tomato serum to high temperatures with a combination of long time during STS preparation. This reduction in exposure to high temperature with a combination of time may be achieved by means of selecting tomato strains yielding serum having higher Brix levels. In this way the evaporation ratio (i.e. the ratio between the final concentration of the STS - usually 60° Bx - and the concentration of the serum prior to evaporation) is reduced. In such a situation, less harsh conditions of temperature and time may be used in order to obtain the final desired concentration. In one preferred embodiment, the evaporation ratio is not greater than 15. In a still more preferred embodiment, the evaporation ratio is not greater than 10.

As already mentioned, STS (in either its powdered or liquid forms) may be used to replace the salt in many different products. The following non-exhaustive, non-limiting lists provide examples of such products:
*Food products in which the salt may be partially replaced by powdered STS:*
   1 Potato chips and/or crisps (salted or seasoned, with or without added oil)
   2. Baked snacks (salted and seasoned, with or without added oil)
   3. Fried snacks (salted and seasoned, with or without added oil)
   4. Extruded baked and fried snacks (salted and seasoned, with or without added oil)
   5. Powdered seasonings and flavors
   7. Powdered spices
   8. Powdered soups
   9. Instant powder gravies and sauces
   10. Table and/or cooking salt
   11. Dried herbs
*Food products in which the salt may be partially replaced by liquid STS:*
   1. Baked snacks (salted and seasoned, with or without added oil)
   2. Fried snacks (salted and seasoned, with or without added oil)
   3. Extruded baked and fried snacks (salted and seasoned, with or without added oil)
   4. Breakfast cereals
   5. Gravies and sauces in liquid form
   6. Soups in liquid form
   7. Breads and other savory baked products
   8. Seeds and nuts.
   9. Meat products

The following examples are provided for illustrative purposes and in order to more particularly explain and describe the present invention. The present invention, however, is not limited to the particular embodiments disclosed in the examples.

### Example 1

### Partial replacement of salt in potato crisps by powdered STS

### Materials and methods:

1. Unsalted potato crisps (Walkers - Smith UK) were purchased in a local supermarket.
2. Salt and powdered STS were blended as follows:
a. 0.75g salt (1.5% in finished product) = Reference.
b. 0.625g Salt + 0.125g STS. (1.25% salt in finished product)
c. 0.5 g salt + 0.25 g STS. (1% salt in finished product)
d. 0.325g salt + 0.325 g STS (0.75% salt in finished product

3. A series of 50 g batches of crisps were put in a laboratory-scale conical tumbler and heated with an electric heat gun for 30 seconds.
4. The appropriate salt and powdered STS blends were sprinkled onto each batch of the heated crisps while tumbling for 2.5 minutes.
5. An internal taste panel was conducted in order to compare crisps flavored with the various salts and STS blends. The results are presented in the following table:

| **% Salt (w/w) in finished product** | **Blend** | **% of salt reduction** | **results** |
|---|---|---|---|
| 1.5 | 0.75g salt + 0g STS | 0 | Typical salty crisps taste |
| 1.25 | 0.625g Salt + 0.125g STS | 16.6% | Very good taste. Salty taste was not infected. |
| 1 | 0.5g salt+ 0.25g STS | 33.3% | Salty taste was not infected. Minor tomato taste |
| 0.75 | 0.325g salt + 0.325 STS | 50% | Minor reduction in salty taste. Minor tomato taste. |

The results of this study indicate that a salt reduction in potato crisps of up to about 50% may be achieved with minimal taste change, by the addition of powdered STS to the seasoning. Furthermore, salt reduction in said crisps of up to about 33.3% may be achieved with no loss whatsoever of saltiness in the product.

### Example 2

### Partial replacement of salt in barbecue (BBQ)flavored potato crisps by powdered STS

### Materials and methods:

1. Unsalted potatoes crisps ("Extra") were obtained from Elite - Frito-Lay Israel.
2. The following basic BBQ seasoning composition was used in this study:

| Ingredient | (%) |
|---|---|
| Chili powder (salt free) | 30 |
| Sugar | 25 |
| Citric acid | 3 |
| Paprika (sweet) | 25 |
| Onion powder | 10 |
| Garlic powder | 8 |

3. The BBQ seasoning was blended with powdered STS as follows:

| Ingredient | No. 1 (control) (% w/w) | No. 2 (% w/w) | No. 3 (%w/w) | No. 4 (% w/w) |
|---|---|---|---|---|
| BBQ seasoning | 85 | 85 | 85 | 85 |
| Salt | 15 | 12.5 | 10 | 7.5 |
| Powdered STS | 0 | 2.5 | 5 | 7.5 |

4. 50 g batches of crisps were heated in a microwave oven for 30 seconds.
5. The batches of warm crisps were placed in plastic bags.
6.10% (w/w) of the blends 1-4 were sprinkled on the potato crisps with the seasoning blends as follows:

| In finished product | 1 (control) | 2 | 3 | 4 |
|---|---|---|---|---|
| % (w/w) Salt | 1.5 | 1.25 | 1.0 | 0.75 |
| % ((w/w) STS | 0 | 0.25 | 0.5 | 0.75 |

7. The bags were shaken for 1-2 minutes.
8. An internal taste panel was conducted in order to compare crisps flavored with the various salt and STS blends. The results are presented in the following table:

### Results:

| **No.** | **% salt in finished product** | **% powdered STS in finished product** | **Reduction of salt (%)** | **results** |
|---|---|---|---|---|
| 1 (control) | 1.5 | 0 | 0 | Typical BBQ taste with salt |
| 2 | 1.25 | 0.25 | 16.6% | Less salty taste than 1. |
| 3 | 1 | 0.5 | 33.3% | Salty taste similar to 1 Minor tomato taste. |
| 4 | 0.75 | 0.75 | 50% | Reduction in salty taste. |
| | | | | Minor tomato taste. |

The results of this study indicate that a salt reduction in potato crisps of up to about 50% may be achieved with minimal taste change, by the addition of powdered STS to the seasoning. Furthermore, salt reduction in said crisps of up to about 33.3% may be achieved with no loss whatsoever of saltiness in the product.

### Example 3

### Partial replacement of salt in bread by liquid STS

Breads generally contain about 1.5-2% salt. The purpose of this study was to reduce the salt level in bread by substituting part of the salt with liquid STS.

### Materials and methods:

| **Materials** | **Sample 1 (g)** | **Sample 2 (g)** | **Sample 3 (g)** | **Sample 4 (g)** | **Instructions** |
|---|---|---|---|---|---|
| Hard winter white wheat flour | 450 | 450 | 450 | 450 | Place in a dough mixer |
| Hydrogenated vegetable fat | 9 | 9 | 9 | 9 | Place in the dough mixer and mix |
| Baking improver | 25 | 25 | 25 | 25 | Place in the dough mixer and continue mixing |
| Fresh yeasts | 25 | 25 | 25 | 25 | Mix together with the sugar and part of the water. Add to the mixer and keep mixing |
| Sugar | 4.5 | 4.5 | 4.5 | 4.5 | |
| Salt | 7.5 | 5 | 5 | 5 | Mix with part of the water. Add in the end |
| Liquid STS | 0 | 2.5 | 0 | 0 | Mix together with salt and water |
| Tap water | 250 | 250 | 250 | 250 | Temperature 28-30°C |
| Mix the ingredients until a uniform mix is formed.Remove portions of the dough and allow them to rest for 5 minutes. Knead the dough by hand and flatten it with a rolling pin. Roll the dough and put in baking dish and in warm chamber (40 °C) for 35 minutes until it doubles its volume. | | | | | |
| Pre-warm a baking oven to 220 °C and place the baking dish, lower the temperature to 180 °C and bake for 35 minutes. Remove the bread from the baking dish and place it on a steel net to cool. | | | | | |

### Results and conclusions:

| Sample No. | % Salt* | % STS* | Results |
|---|---|---|---|
| 1-reference | 1.66 | 0 | Regular bread taste |
| 2 - 33% less salt | 1.11 | 0.55 | Taste like the reference |
| 3 - 33% less salt | 1.11 | 0 | Less salty |

| | | | |
|---|---|---|---|
| * % of the flour | | | |

### Example 4

### Partial replacement of salt in roasted sunflower and bumpkin seeds by liquid STS

Roasted sunflower and pumpkin seeds, which are consumed as a snack food product in many countries, generally contain about 1.5-2% salt. The purpose of this study was to partially replace the salt in these seeds by liquid STS.

### Materials and methods:

1. Fresh de-hulled sunflower and pumpkin seeds were purchased in a local supermarket.
2. Salt and water or/and liquid STS were blended and sprayed on the seeds using a conical laboratory tumbler as follows:
   a. 1.6% salt in finished product - 6.2% of saturated (26%) salt solution = Reference.
   b. 33% less salt with liquid STS - 6.2% of a salt (17.5%) and liquid STS (8.5%) solution.
   c. 50% less salt with liquid STS - 6.2% of a salt (13%) and liquid STS (13%) solution.
3. The seeds were heated and roasted with an electric heat gun for 2.5 minutes.
4. The seeds were cooled in a dish.
5. The samples were tested by a taste panel

### Results:

| **%Salt in finished product** | **Liquid STS % w/w** | **% of salt reduction** | **results** |
|---|---|---|---|
| 1.6 - reference | 0 | 0 | Salty typically taste |
| 1.07 | 0.53 | 33% | More salty than the reference, An attractive tan color |
| 1.07 | 0 | 33% | Similar salty taste as the reference. An attractive tan color |
| 0.8 | 0.8 | 50% | Similar salty taste as the reference. Attractive tan color |
| 0.8 | 0 | 50% | Less salty than the reference. Attractive tan color |

### Example 5

### Effect of STS acidity on salty-taste and flavor enhancement of tomato juice

In this study, tomato juice was used as a model for the evaluation of salt and taste enhancement. The basic formulation used had the following composition:

| **Ingredients** | **Content** |
|---|---|
| Tomato concentrate 28 bx | 15% |
| Cold water (15°C) | 85% |
| Salt | 0.125%* |
| STS | 1%* |

| | |
|---|---|
| * Added | |

Two separate batches of STS were selected for use in this study: one having an acidity (measured as citric acid equivalent) of 3.5%, while the acidity of the other batch was 2.5%.

These two batches, together with a third sample from which the STS (but not the salt) was omitted were sampled by a professional taste panel, using a semi-quantitative 1-10 scale (0 = none; 10 = extensive). The results are presented in the following table:

| **Products** | **Overall taste** | **Tomato flavour** | **Acidity** | **Saltiness** |
|---|---|---|---|---|
| Reference | 5 | 5 | 5 | 5 |
| Reference + STS 3.5% acidity | 8 | 8 | 6 | 8 |
| Reference + STS 2.5% acidity | 8 | 8 | 5 | 5 |

It may be seen from the above results that the STS batch with 3.5% acidity resulted in a significantly greater enhancement of the saltiness of the tomato juice than the batch having an acidity of 2.5%. Both batches caused a similar, significant enhancement of other flavours ("overall taste" and "tomato flavour").

### Example 6

### Effect of STS acidity on salty-taste and flavor enhancement of potato chips

Four separate batches of potato chips were prepared with different amounts of salt and STS powder, as indicated in the following table. Two different STS samples were selected for use in this study: one having an acidity of 3.5% and the other having an acidity of 2.5%.

A comparison of these batches with respect to various taste and flavor properties was performed by a panel of professional tasters. Scores are given on a 0-10 scale which 0 = none, 10 = extensive.

| **Product** | **Overall taste** | **Potato flavour** | **Acidity** | **Saltiness** |
|---|---|---|---|---|
| Potato chips 1.5% salt | 10 | 6 | 0 | 10 |
| 1/3 less salt Potato chips (1.0% salt) | 5 | 5 | 0 | 5 |
| 1/3 less salt Potato chips + 0.5 % STS powder** 3.5% acidity | 10 | 8 | 2 | 10 |
| 1/3 less salt Potato chips + 0.5 % STS powder** 2.5% acidity | 8 | 8 | 0 | 5 |

| | | | | |
|---|---|---|---|---|
| ** prepared by spray drying STS on Maltodextrin | | | | |

As will be seen from these results, the batch that included STS with an acidity of 3.5% performed much better as a salt replacer than the batch having an acidity of 2.5%. Both batches caused a similar, significant enhancement of other flavours ("overall taste" and "potato flavour").

### Example 7

### Effect of browning and formol number on STS efficacy in salty-taste enhancement and flavor enhancement in tomato juice

It has been found that a high degree of browning influences the ability of STS to enhance both salty taste and flavor.

This effect is illustrated in the following study that was performed using tomato juice with and without STS. In one of the batches the tomato juice included 1% browned STS, while another batch included 1% non-browned STS. The browned STS batch was prepared by exposing the tomato serum used to prepare said batch to an excessively high temperature during the evaporation stage.

Flavor evaluation was performed by a panel of professional tasters. Scores are given on a 0-10 scale in which 0 = none and 10 = extensive. The panelists were also asked to indicate their preferred product. Preference was scored as percentage against a reference product without STS. In addition, the formol number of each of the STS batches was measured. The results of these tests are shown in the following table:

| **Products** | **Color intensity** √**a²+b² In STS¹** | **Formol number in STS** | **Overall taste** | **Tomato flavor** | **Acidity** | **Saltiness** | **Bitterness** | **Preferences²** |
|---|---|---|---|---|---|---|---|---|
| Reference without STS | - | - | 5 | 5 | 5 | 5 | 3 | - |
| Reference + 1% non browned STS | 13 | 45 | 8 | 8 | 6 | 8 | 2 | 100% |
| Reference + 1% browned STS | 25 | 35 | 4 | 4 | 5 | 4 | 4 | 20% |

| | | | | | | | | |
|---|---|---|---|---|---|---|---|---|
| ¹ Color intensity - browning evaluation index. ² preferences - % preferred on reference product. | | | | | | | | |

The results indicate that the non-browned STS sample (i.e. the sample having a color intensity value of 15 or less and a formol number of 45) was greatly superior to the browned STS sample with regard to the ability of said samples to cause enhancement of saltiness and of other flavors.

While specific embodiments of the invention have been described for the purpose of illustration, it will be understood that the invention may be carried out in practice by skilled persons with many modifications, variations and adaptations, without departing from its spirit or exceeding the scope of the claims.

## Claims

1. A method for partially replacing the salt added to food products, such that it is possible to reduce the total amount of salt added to said products while retaining the saltiness thereof, comprising the addition of soluble tomato solids (STS) to said food products, wherein said STS is not subjected to any further treatment aimed at removing colour or flavour therefrom.

2. The method according to claim 1, wherein the STS used is **characterized in** having an acidity level within the range of about 3% to about 4%.

3. The method according to claim 1, wherein the STS used is **characterized in** having:
a) an acidity level within the range of about 3% to about 4%;
b) a formol number greater than about 400, preferably more than 500; and
c) a color intensity of up to 20, preferably up to 15 wherein said color intensity value is determined as the V a<2>+b<2> value derived from a colorimetric measurement;
wherein said acidity level, formol number and color intensity number are measured in a STS sample having a concentration of 60° Brix.

4. The method according to claim 1, wherein the food product is selected from the group consisting of fried snack foods, baked snack foods, breads, seeds and nuts, powdered seasonings and flavors, powdered spices, powdered soups, soups in liquid form, instant powder gravies and sauces, gravies and sauces in liquid form, table and/or cooking salt, dried herbs and breakfast cereals; optionally wherein the food product is a fried snack food product, comprising potato crisps.

5. The method according to claim 1 comprising one or more of the following features:
(i) wherein the STS is added to the food product in a powdered form;
(ii) wherein the STS is added to the food product in a liquid form;
(iii) wherein the STS is pre- blended with the reduced amount of salt prior to addition thereof to the food product.

6. The method according to claim 1, wherein the food product is potato crisps, and wherein said method comprising the steps of: a) preparing a seasoning pre-blend comprising salt and powdered STS; b) adding said seasoning pre-blend to a batch of potato crisps and mixing said pre-blend with said crisps.

7. The method according to claim 6, wherein the STS used is **characterized in** having either:
(i) an acidity level within the range of about 3% to about 4%; or
(ii) a) an acidity level within the range of about 3% to about 4%; b) a formol number greater than about 400, preferably greater than 500; and c) a color intensity of up to 20, preferably up to 15 wherein said color intensity value is determined as the V a<2>+b<2> value derived from a colorimetric measurement; wherein said acidity level, formol number and color intensity number are measured in a STS sample having a concentration of 60° Brix.

8. The method according to claim 6, comprising one or more features:
(i) wherein the addition of the pre-blend to the potato crisps and the mixing together thereof is performed in a tumbler;
(ii) wherein the pre-blend mixture of powdered STS and salt comprises up to about 50% w/w powdered STS, wherein the total amount of said mixture added to the potato crisps is substantially equal to the amount of salt added to regular salted crisps.
(iii) wherein the pre-blend mixture of powdered STS and salt comprises up to 50% w/w powdered STS and more than 50% salt, wherein the total amount of said mixture added to the potato crisps is substantially equal to the amount of salt added to regular salted crisps.

## Patentansprüche

1. Verfahren zum Teilersetzen des Salzes, das Nahrungsmittelprodukten zugegeben wird, so dass es möglich ist, die Gesamtsalzmenge, die den Produkten zugegeben wird, zu reduzieren, während deren Salzigkeit bewahrt wird, wobei das Verfahren die Zugabe von löslichen Tomatenfeststoffen (soluble tomato solids, STS) zu den Nahrungsmittelprodukten umfasst, wobei die STS keiner beliebigen Weiterbehandlung unterzogen werden, die darauf abzielt, diesen Farbe oder Geschmack zu entziehen.

2. Verfahren nach Anspruch 1, wobei die verwendeten STS **dadurch gekennzeichnet sind, dass** sie einen Säuregrad innerhalb des Bereichs von etwa 3 % bis etwa 4 % aufweisen.

3. Verfahren nach Anspruch 1, wobei die verwendeten STS **dadurch gekennzeichnet sind, dass** sie Folgendes aufweisen:
a) einen Säuregrad innerhalb des Bereichs von etwa 3 % bis etwa 4 %;
b) eine Formolzahl von mehr als etwa 400, vorzugsweise mehr als 500 und
c) eine Farbintensität von bis zu 20, vorzugsweise bis zu 15, wobei der Farbintensitätswert als der Wert V a<2>+b<2> bestimmt wird, der von einer kolorimetrischen Messung abgeleitet wird;
wobei der Säuregrad, die Formolzahl und die Farbintensitätszahl in einer STS-Probe mit einer Konzentration von 60° Brix gemessen werden.

4. Verfahren nach Anspruch 1, wobei das Nahrungsmittelprodukt aus der Gruppe bestehend aus frittiertem Knabbergebäck, gebackenem Knabbergebäck, Broten, Samen und Nüssen, Würz- und Aromapulvern, Gewürzpulvern, Suppenpulvern, Suppen in flüssiger Form, Instant-Bratensoßenpulvern und -Soßenpulvern, Bratensoßen und Soßen in flüssiger Form, Tafel- und/oder Kochsalz, getrockneten Kräutern und Frühstücksflocken ausgewählt ist; gegebenenfalls wobei das Lebensmittelprodukt ein frittiertes Knabbergebäckprodukt ist, das Kartoffelchips umfasst.

5. Verfahren nach Anspruch 1, das ein oder mehrere der folgenden Merkmale umfasst:
(i) wobei die STS dem Lebensmittelprodukt in einer Pulverform zugegeben werden;
(ii) wobei die STS dem Lebensmittelprodukt in einer flüssigen Form zugegeben werden;
(iii) wobei die STS vor deren Zugabe zu dem Nahrungsmittelprodukt mit der reduzierten Salzmenge vorgemischt werden.

6. Verfahren nach Anspruch 1, wobei das Nahrungsmittelprodukt Kartoffelchips ist und wobei das Verfahren die folgenden Schritte umfasst:
a) Zubereiten einer Würzvormischung, die Salz und STS-Pulver umfasst;
b) Zugeben der Würzvormischung zu einer Kartoffelchipcharge und Mischen der Vormischung mit den Chips.

7. Verfahren nach Anspruch 6, wobei die verwendeten STS **dadurch gekennzeichnet sind, dass** sie eines der folgenden aufweisen:
(i) einen Säuregrad innerhalb des Bereichs von etwa 3 % bis etwa 4 % oder
(ii)
a) einen Säuregrad innerhalb des Bereichs von etwa 3 % bis etwa 4 %;
b) eine Formolzahl von mehr als etwa 400, vorzugsweise mehr als 500 und
c) eine Farbintensität von bis zu 20, vorzugsweise bis zu 15, wobei der Farbintensitätswert als der Wert V a<2>+b<2> bestimmt wird, der von einer kolorimetrischen Messung abgeleitet wird;
wobei der Säuregrad, die Formolzahl und die Farbintensitätszahl in einer STS-Probe mit einer Konzentration von 60° Brix gemessen werden.

8. Verfahren nach Anspruch 6, das ein oder mehrere Merkmale umfasst:
(i) wobei die Zugabe der Vormischung zu den Kartoffelchips und Vermischen dieser in einem Taumelmischer durchgeführt wird;
(ii) wobei das Vorgemisch von STS-Pulver und Salz bis zu etwa 50 Gew.-% STS-Pulver umfasst, wobei die Gesamtmenge des Gemischs, die den Kartoffelchips zugegeben wird, im Wesentlichen gleich der Salzmenge ist, die normalen gesalzenen Chips zugegeben wird;
(iii) wobei das Vorgemisch von STS-Pulver und Salz bis zu 50 Gew.-% STS-Pulver und mehr als 50 % Salz umfasst, wobei die Gesamtmenge des Gemischs, die den Kartoffelchips zugegeben wird, im Wesentlichen gleich der Salzmenge ist, die normalen gesalzenen Chips zugegeben wird.

## Revendications

1. Procédé pour le remplacement en partie du sel ajouté à des produits alimentaires, de façon telle qu'il est possible de réduire la quantité totale de sel ajouté auxdits produits tout en conservant le goût salé de ceux-ci, comprenant l'ajout de matières solides de tomate solubles (STS) auxdits produits alimentaires, dans lequel lesdites STS ne sont pas soumises à un quelconque traitement supplémentaire visant à enlever la couleur ou l'arôme de celles-ci.

2. Procédé selon la revendication 1, dans lequel les STS utilisées sont **caractérisées en ce qu'**elles ont un niveau d'acidité dans la plage d'environ 3 % à environ 4 %.

3. Procédé selon la revendication 1, dans lequel les STS utilisées sont **caractérisées en ce qu'**elles ont :
a) un niveau d'acidité dans la plage d'environ 3 % à environ 4 % ;
b) un indice de formol supérieur à environ 400, de préférence de plus de 500 ; et
c) une intensité de couleur allant jusqu'à 20, de préférence allant jusqu'à 15, ladite valeur d'intensité de couleur étant déterminée comme la valeur de Va<2>+b<2> dérivée d'une mesure colorimétrique ;
dans lequel lesdits niveau d'acidité, indice de formol et indice d'intensité de couleur sont mesurés dans un échantillon de STS ayant une concentration de 60° Brix.

4. Procédé selon la revendication 1, dans lequel le produit alimentaire est choisi dans le groupe constitué par les aliments à grignoter frits, les aliments à grignoter cuits, les pains, les graines et les fruits à coque, les assaisonnements et arômes en poudre, les épices en poudre, les soupes en poudre, les soupes sous forme liquide, les sauces et coulis en poudre instantanés, les sauces et coulis sous forme liquide, le sel de table et/ou le gros sel, les herbes séchées et les céréales pour petit-déjeuner ; facultativement dans lequel le produit alimentaire est un produit alimentaire à grignoter frit, notamment des pommes chips.

5. Procédé selon la revendication 1 comprenant une ou plusieurs des caractéristiques suivantes .
(i) dans lequel les STS sont ajoutées au produit alimentaire sous une forme en poudre ;
(ii) dans lequel les STS sont ajoutées au produit alimentaire sous une forme liquide ;
(iii) dans lequel les STS sont prémélangées avec la quantité réduite de sel avant ajout de ceux-ci au produit alimentaire.

6. Procédé selon la revendication 1, dans lequel le produit alimentaire est des pommes chips et ledit procédé comprenant les étapes consistant à :
a) préparer un prémélange d'assaisonnement comprenant du sel et des STS en poudre ;
b) ajouter ledit prémélange d'assaisonnement à un lot de pommes chips et mélanger ledit prémélange avec lesdites chips.

7. Procédé selon la revendication 6, dans lequel les STS utilisées sont **caractérisées en ce qu'**elles ont soit :
(i) un niveau d'acidité dans la plage d'environ 3 % à environ 4 % ; soit
(ii)
a) un niveau d'acidité dans la plage d'environ 3 % à environ 4 % ;
b) un indice de formol supérieur à environ 400, de préférence supérieur à 500 ; et
c) une intensité de couleur allant jusqu'à 20, de préférence allant jusqu'à 15, ladite valeur d'intensité de couleur étant déterminée comme la valeur de Va<2>+b<2> dérivée d'une mesure colorimétrique ;
dans lequel lesdits niveau d'acidité, indice de formol et indice d'intensité de couleur sont mesurés dans un échantillon de STS ayant une concentration de 60° Brix.

8. Procédé selon la revendication 6, comprenant une ou plusieurs caractéristiques :
(i) dans lequel l'ajout du prémélange aux pommes chips et le mélange de ceux-ci ensemble sont effectués dans un tambour rotatif ;
(ii) dans lequel le mélange prémélangé de STS en poudre et de sel comprend jusqu"à environ 50 % p/p de STS en poudre, la quantité totale dudit mélange ajouté aux pommes chips étant pratiquement égale à la quantité de sel ajouté à des chips salées ordinaires ;
(iii) dans lequel le mélange prémélangé de STS en poudre et de sel comprend jusqu'à 50 % p/p de STS en poudre et plus de 50 % de sel, la quantité totale dudit mélange ajouté aux pommes chips étant pratiquement égale à la quantité de sel ajouté à des chips salées ordinaires.
